# EUROPEAN PATENT SPECIFICATION

(11) **EP 0 651 570 B1**
(45) Date of publication and mention of the grant of the patent: **22.12.1999**
(21) Application number: 94116620.9
(22) Date of filing: 21.10.1994
(51) Int. Cl.: H04N 5/445, G04G 15/00

(54) **Improved television receiver with timer means**
Verbesserter Fernsehempfänger mit Zeitgeber
Récepteur de télévision amélioré avec une minuterie

(30) Priority: 27.10.1993 IT RM930710
(43) Date of publication of application: 03.05.1995
(73) Proprietor: EDICO S.r.l., I-00197 Roma (IT)
(72) Inventor: d'Errico, Federico, I-00186 Roma (IT)

(56) References cited:
- EP-A- 0 366 001
- EP-A- 0 384 388
- WO-A-86/06239
- DE-A- 3 137 047
- US-A- 4 198 551
- US-A- 4 547 804
- US-A- 4 750 034
- US-A- 4 750 052
- US-A- 4 782 401

## Description

The present invention relates to a television receiver, equipped with circuitry means for receiving a plurality of television programs, with display means for displaying the image corresponding to at least one of which, with a memory for storing the tuning data associated to said plurality of programs, with command means and control means.

It is known that the publicity inserts represent for the user of a television receiver one of the major drawbacks; systems for identifying such publicity inserts have been proposed, but none of which have resulted in being satisfactory; in reality an efficient system would be that in which the broadcaster himself signals the beginning and end of the insert, for example as is provided with the known V.P.S. system (Video Programming System); but it is easy to see that any broadcaster that uses publicity will never be willing to supply the user with means for avoiding such; in fact, if someone were to discover a system for identifying the inserts (for instance based on determined technical characteristics), the broadcaster would see to modifying as soon as possible the transmission so as to avoid its possible identification.

It is known from EP-A-0366001 that a commercial message timer, when enabled by the user, stores data indicative of a first tuned station and begins timing a predetermined time period. Upon expiration of the time period, the first tuned station is automatically reselected if it had been deselected after the timer was enabled.

It is known from EP-A-0384388 the use of a similar timer in response to a channel change command of a television receiver or in response to the pressing of the "Pause" key of a VCR. The timer reminds the user, after the expiration of a determined time period, that the commercial message may be over.

Such known methods are not comfortable for the user, because the duration of the period is either fixed or must be remembered and introduced manually by the user. It is also known from US-A-4782401 a method and apparatus for controlling the operation of a video recorder during the recording of a video signal, in order to edit the commercials from the recording. The apparatus is provided with an automatic picture break detector which detects dark picture breaks in the video signal, having a duration greater then a predetermined minimum duration; the lengths of the commercial is so identified, with the use of the timer, and a rewind circuit is actuated by the commercial detecting circuit, in order to avoid the recording of the commercials.

Such known method has a very poor reliability because the identification of the commercial messages based on the dark breaks has proved not to be effective.

The present invention proposes the aim of indicating how it is possible to realise a television receiver that does however allow the user to reduce the problems produced by the publicity inserts.

For obtaining the indicated aim, the present invention has as its subject a television signal receiver, having the characteristics described in the attached claim 1.

Further aims and advantages of the present invention shall result in being clear from the following description and annexed drawings supplied purely as an explanatory and non-limiting example, wherein:

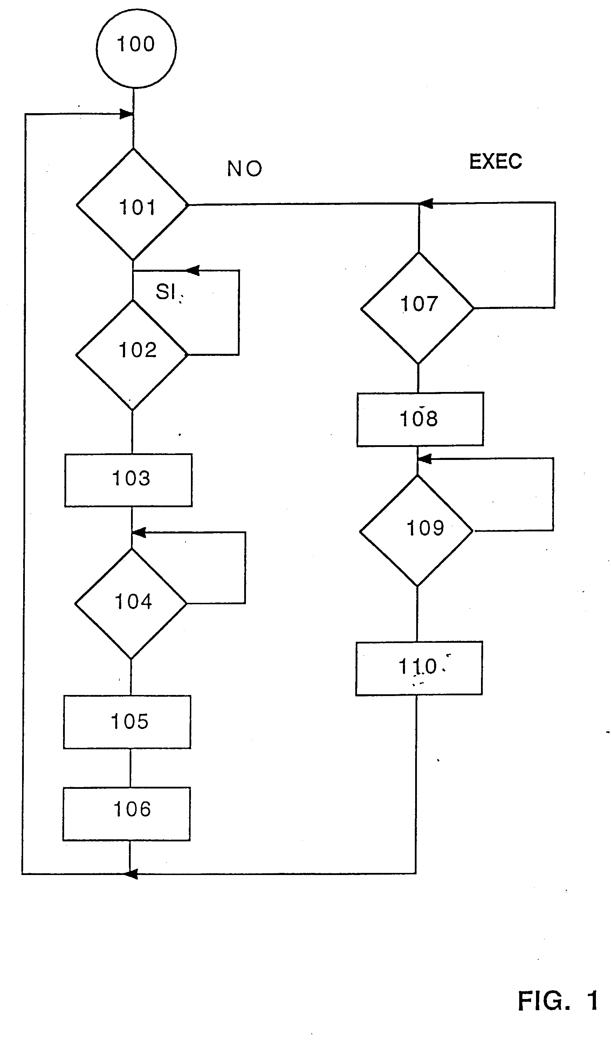

- figure 1 schematically represents a significant part of the logic circuit of the control unit of the television receiver according to the invention.

The invention is based on the acknowledgement of the fact that the majority of users, when a publicity insert begins, carry out one of the two following operations:
- or they lower the volume and dedicate time to another activity, for example conversation;
- or change channel so as to temporarily watch another program.

The trouble is that the user does not know when the publicity insert will finish and therefore risks the loss of a part of the program that was being watched, if he returns to it with a delay; or if he returns before the insert has finished and has to then put up with a part of the publicity.

It would however be desirable that the user be advised of the moment in which the publicity insert finishes.

The exact moment unfortunately can not be determined; although it has been discovered that every broadcaster has it's insertion and duration cycle of the inserts; and therefore for instance one may effect 4 inserts every hour, each having a duration of 4 minutes; the interval between two inserts is not however always constant, as the intention is to insert them during the moments of greater interest for the viewers.

The invention therefore proposes to supply the user a simple means for:
a) measuring the duration of the inserts of a broadcaster;
b) memorise such duration, grouping it with the broadcaster in question;
c) advising, every time that an insert begins, when such duration has passed.

The command device of the television receiver (normally a remote control unit) would have, for example 4 keys, marked "L(earn)", "E(xec)", "B(egin)", "S(top)", the keys L and E are of reciprocal exclusion (bistable).

In figure 1 a part of the logic circuit of the central control unit is represented.

Such circuit can be indifferently realised with the cabled logic system or with the programmed logic system, i.e. utilising a microprocessor; such second system is generally less expensive, also because television receivers normally contain one or more microprocessors.

In figure 1 number 100 indicates the starting block of the programming operation; block 100 passes control to the successive block 101.

Block 101 is a control block; it verifies whether the user has pressed the key L; in the affirmative case control is passed to block 102, in the negative case control is passed to block 107 (in all the control blocks the inferior output is the YES output; the lateral output is the NO output).

Block 102 is a control block; it verifies whether the user has pressed the key B; in the affirmative case control is passed to block 103, in the negative case control is passed back to block 102.

Block 103 provides for zeroing the timer and for making it start; control is then passed to the successive block 104.

Block 104 is a control block; it verifies whether the user has pressed the key S; in the affirmative case control is passed to block 105, in the negative case control is passed back to block 104.

Block 105 provides for stopping the timer and then passes the control to the successive block 106.

Block 106 provides for:
- reading the time signalled by the timer;
- storing the data in a non volatile memory, coupled to the tuning information of the received program;
- passing control back to block 101.

Block 107 is a control block; it verifies whether the user has pressed the key B; in the affirmative case control is passed to block 108, in the negative case control is passed to block 107 Block 108 provides for:
- reading the time stored in the non volatile memory associated to the program being received;
- storing such time in a memory or temporal register (buffer);
- zeroing the timer and making it start;
- passing control to the successive block 109.

Block 109 is a control block; it verifies whether the time signalled by the timer is greater than or equal to the stored value in the buffer; in the affirmative case control is passed to block 110, in the negative case control is passed to block 109.

Block 110 provides for signalling to the user that the time has passed; control then passes back to block 101.

The signalling that the time has passed can be visual, by the way of a superimposition on the screen of a text or a simple flashing signal; or in an audio manner by sending a normal acoustic attention signal (beep) to the loudspeaker; or by both means.

The characteristics of the described television receiver result in being clear from the given description and annexed drawings.

From the given description the advantages of the television receiver subject of the present invention also result in being clear.

In particular they consist in the fact that the user can, program by program, memorise the time of a typical publicity insert; for doing so it is sufficient that, after having pressed the key L, he presses the key B at the beginning of an insert and the key S upon it's termination. The time is memorised and associated to the program received. The user can then, after having pressed the key E (that can automatically be pre-set every time that the television receiver is switched on), press the key B at the beginning of an insert, and therefore lower the volume or change channel; the control circuit will automatically advise him when the time of the insert has passed, so as that the user can return to the interrupted program.

It is clear that numerous variants can be applied by the man skilled in the art to the television receiver described as an example, without for this departing from the novelty principles inherent in the invention.

In particular the invention can be indifferently applied either to a television set or a video recorder.

In fact in the latter case the invention can be particularly useful when the user wishes to record a transmission eliminating the publicity inserts, by stopping the recording to reactivate it as soon as the publicity has finished; in such situation the invention is useful for avoiding that the user, not wishing to record the publicity, be obliged, at least during the moment of recording, to sit through them.

Another variant could consist in associating the described method to a circuit of those already proposed for the automatic detection of the publicity inserts, with the aim of increasing it's reliability, especially for determining the end of the publicity insert.

## Claims

1. Television signal receiver, equipped with circuitry means for receiving a plurality of television programs, associated with display means, for displaying the image corresponding to at least one of which, with a station memory for storing the tuning data associated to said plurality of programs, with command means and control means, and with timer means for measuring the duration of defined intervals of time and storing said intervals of time, characterised in that, in order to determine the duration of an advertising insert of a television program, said command means comprise first means (L) for setting a first functional mode, second means (E) for setting a second functional mode, third means (B) for starting, in said first functional mode, the duration measurement, fourth means (S) for terminating, in said first functional mode, the duration measurement, wherein said control means provide for storing the value of the measured duration of the insert of a determined program in said station memory, associating it with the tuning data of said determined program and wherein said control means, in said second functional mode, when said third means (B) are activated, provide for reading out the time stored in said station memory and associated with the program being, received, and for starting the timer and as soon as the time counted by the timer is equal to the read out value giving a warning signal to the user.

2. Television signal receiver, according to claim 1, further characterised in that said first means (L), said second means (E), said third means (B) and said fourth means (S) are keys.

3. Television signal receiver, according to claim 1, further characterised in that said first means (L) and said second means (E) are of the reciprocal exclusion type (bistable).

4. Television signal receiver, according to claim 1, further characterised in that, in said first functional mode, when said fourth means (S) are activated, said control means provide for:
- reading the time counted by the timer;
- storing the corresponding data in said station memory means, coupled to the tuning information of the received program.

5. Television signal receiver, according to claim 1, further characterised in that, in said second functional mode, when said third means (B) are activated, said control means provide for:
- reading the time data stored in the said station memory, associated to the program being received;
- storing such data in a temporary memory;
- zeroing the timer and making it start.

6. Television signal receiver, according to claim 5, further characterised in that said control means arrange for activating an attention signal for the user as soon as the time counted by the timer is equal to or greater than the stored data.

7. Television signal receiver, according to claim 6, further characterised in that said attention signal is a visual signal.

8. Television signal receiver, according to claim 6, further characterised in that said attention signal is an acoustic signal.

9. Television signal receiver, according to claim 7, further characterised in that said visual signal is displayed on the said display means.

10. Television signal receiver, according to claim 9, further characterised in that said visual signal is realized making a picture element of the television image flash.

11. Television signal receiver, according to one or more of the preceding claims, further characterised in that it comprises a circuit that automatically detects the presence of a publicity insert and that the end of the publicity insert is determined with the aid of said timer means.

## Patentansprüche

1. Fernsehempfänger, ausgestattet mit Schaltungen zum Empfangen einer Vielzahl von Fernsehprogrammen, verbunden mit Anzeigemitteln zum Anzeigen des mindestens einem dieser Programme entsprechenden Bildes, mit einem Senderspeicher zum Speichern der mit der Vielzahl von Programmen zusammenhängenden Abstimmdaten, mit Befehls- und Steuermitteln und mit Zeitmeßmitteln zum Messen definierter Zeitintervalle und zum Speichern dieser Zeitintervalle,
dadurch gekennzeichnet, daß um die Dauer von Werbeeinlagen in einem Fernsehprogramm festzustellen, die Steuermittel über erste Mittel (L) zum Einstellen eines ersten Funktionsmodus verfügen, über zweite Mittel (E) zum Einstellen eines zweiten Funktionsmodus, über dritte Mittel (B) zum Starten der Messung der Zeitdauer im ersten Funktionsmodus, über vierte Mittel (S) zum Beenden der Messung der Zeitdauer im ersten Funktionsmodus, wobei die Steuermittel über Vorkehrungen zum Speichern des Wertes der gemessenen Dauer der Einlage in einem gegebenen Programm im Senderspeicher verfügen, wobei diese Zeitdauer den Sendereinstelldaten des betroffenen Programms zugeordnet wird und wobei die Steuermittel im zweiten Funktionsmodus dafür sorgen, daß die im Sendespeicher gespeicherte und dem empfangenen Programm zugeordnete Zeit gelesen wird, wenn die dritten Mittel (B) aktiviert sind, sowie für das Starten der Zeitmeßmittel und dafür, daß sobald die vom Zeitmeßmittel gemessene Zeitdauer dem gelesenen Wert gleicht, dem Benutzer ein Warnsignal gegeben wird.

2. Fernsehempfänger gemäß Anspruch 1, ferner dadurch gekennzeichnet, daß die ersten Mittel (L), die zweiten Mittel (E), die dritten Mittel (B) und die vierten Mittel (S) Schlüssel sind.

3. Fernsehempfänger gemäß Anspruch 1, ferner dadurch gekennzeichnet, daß die ersten Mittel (L) und die zweiten Mittel (E) vom Typ sind, der sich gegenseitig ausschließt (bistabil).

4. Fernsehempfänger gemäß Anspruch 1, ferner dadurch gekennzeichnet, daß die Steuermittel im ersten Funktionsmodus, bei aktivierten vierten Mitteln (S), folgendes bewirken:
- das Lesen der von den Zeitmeßmitteln gemessenen Zeitdauer,
- das Speichern der entsprechenden Daten im Senderspeicher, gekoppelt mit der Sendereinstellinformation des empfangenen Programms.

5. Fernsehempfänger gemäß Anspruch 1, ferner dadurch gekennzeichnet, daß die Steuermittel im zweiten Funktionsmodus, bei aktivierten dritten Mitteln (B), folgendes bewirken:
- das Lesen der dem empfangenen Programm zugeordneten, im Senderspeicher gespeicherten Zeitdaten,
- das Speichern dieser Daten in einem zeitlich begrenzten Speicher,
- die Nulleinstellung der Zeitmeßmittel und deren Start.

6. Fernsehempfänger gemäß Anspruch 5, ferner dadurch gekennzeichnet, daß die Steuermittel dafür sorgen, daß ein Aufmerksamkeitssignal für den Benutzer aktiviert wird, sobald die von den Zeitmeßmitteln gemessene Zeit größer oder gleich der gespeicherten Zeitdaten ist.

7. Fernsehempfänger gemäß Anspruch 6, ferner dadurch gekennzeichnet, daß das Aufmerksamkeitssignal ein visuelles Signal ist.

8. Fernsehempfänger gemäß Anspruch 6, ferner dadurch gekennzeichnet, daß das Aufmerksamkeitssignal ein akustisches Signal ist.

9. Fernsehempfänger gemäß Anspruch 7, ferner dadurch gekennzeichnet, daß das visuelle Signal auf den Anzeigemitteln angezeigt wird.

10. Fernsehempfänger gemäß Anspruch 9, ferner dadurch gekennzeichnet, daß das visuelle Signal dadurch realisiert wird, daß ein Bildelement des Fernsehbildes blinkt.

11. Fernsehempfänger gemäß einem oder mehreren der vorausgehenden Ansprüche, ferner dadurch gekennzeichnet, daß er eine Schaltung umfaßt, daß das Vorhandensein einer Werbeeinlage automatisch erfaßt und, daß das Ende der Werbeeinlage mit Hilfe der Zeitmeßmittel festgestellt wird.

## Revendications

1. Récepteur de signal de télévision équipé de moyens de circuit destinés à recevoir une pluralité de programmes de télévision, associés à des moyens d'affichage, pour afficher l'image correspondant à au moins l'un des programmes, avec une mémoire de station pour stocker les données d'accord associées à ladite pluralité de programmes, avec des moyens d'instruction et des moyens de contrôle et avec des moyens de minuterie pour mesurer la durée d'intervalles de temps définis et pour stocker lesdits intervalles de temps, caractérisé en ce que, pour déterminer la durée d'une insertion de publicité d'un programme de télévision, lesdits moyens de contrôle comprennent des premiers moyens (L) pour fixer un premier mode de fonctionnement, des deuxièmes moyens (E) pour fixer un deuxième mode de fonctionnement, des troisièmes moyens (B) pour lancer, dans ledit premier mode de fonctionnement, la mesure de durée, des quatrièmes moyens (S) pour achever, dans ledit premier mode de fonctionnement. la mesure de durée, dans lequel récepteur lesdits moyens de contrôle assurent le stockage de la valeur de la durée mesurée de l'insertion d'un programme déterminé dans ladite mémoire de station, en l'associant aux données d'accord dudit programme déterminé et dans lequel lesdits moyens de contrôle, dans ledit deuxième mode fonctionnel, lorsque lesdits troisièmes moyens (B) sont activés, assurent la lecture du temps mémorisé dans ladite mémoire de station et associé au programme en cours de réception, et pour lancer la minuterie et, dès que la durée comptée par la minuterie est égale à la valeur lue, fournir un signal d'avertissement à l'utilisateur.

2. Récepteur de signal de télévision selon la revendication 1, caractérisé en outre en ce que lesdits premiers moyens (L), lesdits deuxièmes moyens (E), lesdits troisièmes moyens (B) et lesdits quatrièmes moyens (S) sont des touches (de clavier).

3. Récepteur de signal de télévision selon la revendication 1, caractérisé en outre en ce que lesdits premiers moyens (L) et lesdits deuxièmes moyens (E) sont du type à exclusion réciproque (bistable).

4. Récepteur de signal de télévision selon la revendication 1, caractérisé en outre en ce que dans ledit premier mode fonctionnel, lorsque lesdits quatrièmes moyens (S) sont activés, lesdits moyens de contrôle assurent :
- la lecture du temps compté par la minuterie;
- la mémorisation des données correspondantes dans lesdits moyens de mémoire de station, couplés à l'information d'accord du programme reçu.

5. Récepteur de signal de télévision selon la revendication 1, caractérisé en outre en ce que, dans ledit deuxième mode fonctionnel, lorsque lesdits troisièmes moyens (B) sont activés, lesdits moyens de contrôle assurent :
- la lecture des données de durée stockées dans ladite mémoire de station, associées au programme en cours de réception:
- la mémorisation de ces données dans une mémoire temporaire :
- la mise à zéro de la minuterie et sa mise en fonctionnement.

6. Récepteur de signal de télévision selon la revendication 5, caractérisé en outre en ce que lesdits moyens de contrôle sont agencés pour activer un signal d'attention destiné à l'utilisateur, dès que la durée comptée par la minuterie est égale ou supérieure aux données mémorisées.

7. Récepteur de signal de télévision selon la revendication 6, caractérisé en outre en ce que ledit signal d'attention est un signal visuel.

8. Récepteur de signal de télévision selon la revendication 6, caractérisé en outre en ce que ledit signal d'attention est un signal acoustique.

9. Récepteur de signal de télévision selon la revendication 7, caractérisé en outre en ce que ledit signal virtuel est affiché sur lesdits moyens d'affichage.

10. Récepteur de signal de télévision selon la revendication 9, caractérisé en outre en ce que ledit signal visuel est réalisé en constituant un élément d'image clignotant sur l'image de télévision.

11. Récepteur de signal de télévision selon l'une ou plusieurs des revendications précédentes, caractérisé en outre en ce qu'il comprend un circuit qui détecte automatiquement la présence d'une insertion publicitaire, et en ce que la fin de l'insertion publicitaire est déterminé à l'aide desdits moyens de minuterie.
